Europäisches Patentamt

European Patent Office

Office européen des brevets

(19)

(11) **EP 0 653 038 B1**

(12) **FASCICULE DE BREVET EUROPEEN**

(45) Date de publication et mention
de la délivrance du brevet:
**15.01.1997 Bulletin 1997/03**

(21) Numéro de dépôt: **93917828.1**

(22) Date de dépôt: **27.07.1993**

(51) Int Cl.6: **F21V 7/00, F21V 8/00**

(86) Numéro de dépôt international:
**PCT/FR93/00765**

(87) Numéro de publication internationale:
**WO 94/02777 (03.02.1994 Gazette 1994/04)**

(54) **DISPOSITIF D'ECLAIRAGE REPARTI**

VERTEILT BELEUCHTUNGSVORRICHTUNG

DISTRIBUTED LIGHTING DEVICE

(84) Etats contractants désignés:
**AT BE DE ES GB IT**

(30) Priorité: **27.07.1992 FR 9209251**

(43) Date de publication de la demande:
**17.05.1995 Bulletin 1995/20**

(73) Titulaire: **Parmentier, François
F-76610 Le Havre (FR)**

(72) Inventeur: **Parmentier, François
F-76610 Le Havre (FR)**

(74) Mandataire: **Dronne, Guy
Cabinet Beau de Loménie
158, rue de l'Université
75340 Paris Cédex 07 (FR)**

(56) Documents cités:
**EP-A- 0 453 092          EP-A- 0 457 009
WO-A-90/10823          GB-A- 2 165 631
GB-A- 2 196 100**

Printed by Jouve, 75001 PARIS (FR)

## Description

La présente invention est un perfectionnement des dispositifs d'éclairage utilisant le guide optique plan, connus sous le nom générique de dispositif à éclairage par la tranche. Ces dispositifs comprennent un guide de lumière, généralement une plaque de polyméthacrylate de méthyle (PMMA), ou d'une autre matière substantiellement transparente, qui conduit par réflexion interne totale sur ses parois un flux lumineux alimenté par une section ou tranché du guide.

Ces guides optiques plans sont illuminés par une ou plusieurs sources lumineuses, par une tranche de la pièce, qui est généralement polie.

Le flux lumineux circulant dans le guide peut être intercepté par un dessin, un motif, une gravure, un signal, un objet déposé sur sa surface, faisant corps avec lui, et dont l'indice de réfraction est de préférence proche de celui de son matériau constitutif.

Ce dessin ou cet objet apparaît alors lumineux. En effet, le flux lumineux qui le frappe est redispersé de manière plus ou moins isotrope. De ce fait, une fraction de la lumière qui le frappe est réémise sous un angle tel qu'elle puisse sortir du guide par la face opposée à celle ou est déposé le dessin.

La lumière peut également se trouver réémise du côté où se trouve déposé l'objet ou dessin si celui-ci est suffisamment mince.

Si le dessin ou l'objet déposé sur la surface du guide optique est de grandes dimensions, par rapport à l'épaisseur de la plaque, des différences d'éclairement importantes apparaîtront entre les parties proches de la source, ou de la tranche éclairée et celles qui en sont éloignées.

Le flux lumineux s'affaiblit dans le guide au fur et à mesure de son absorption par la surface du dessin à éclairer.

GB-A-2 165 631 et GB-A-2 196 100 concernent des structures dérivées du guide optique plan dans lesquelles la lumière est émise hors du guide par un diffusant. Dans GB-A-2 196 100, la lumière émise est corrigée ultérieurement par un écran correcteur et réfléchissant placé en dehors de la structure émettrice.

Selon la présente invention, on agit directement sur la lumière qui se propage dans le guide et non sur la lumière émise à l'extérieur du guide.

La présente invention concerne donc un dispositif d'éclairage comprenant au moins un guide optique conformé en une plaque, dont le coeur est réalisé en un matériau principal transparent, guide optique possédant au moins une face la délimitant et une tranche d'illumination, éclairé par l'intermédiaire de ladite tranche par au moins une source de lumière et destiné à l'éclairement d'un objet, d'une image ou d'une structure déposé sur ladite face.

Selon l'invention, ce dispositif d'éclairage présente les caractéristiques contenues dans les revendications 1 et 15.

Avantageusement, la première couche est réalisée en un premier matériau transparent dont l'indice de réfraction est inférieur à l'indice de réfraction dudit matériau principal.

Cette première couche discontinue est également désignée dans le présent mémoire par "couche à bas indice".

Les discontinuités peuvent avoir toute forme voulue : cercles, traits, etc., et laissent apparaître à nu le support de la couche. La répartition des discontinuités est, de préférence, non uniforme de manière à permettre un éclairement contrôlé de l'objet, image ou structure déposé sur la face recouverte par la couche discontinue de matériau à bas indice.

Dans les conditions normales de fonctionnement d'un tel dispositif, l'indice de réfraction de la couche de matériau à bas indice est suffisamment bas pour assurer la conduction par réflexion totale du flux lumineux circulant dans le guide.

Pour un bon fonctionnement de ce dispositif, l'écart d'indice entre le matériau du guide (N0) et le matériau de la couche à bas indice (N1) est adapté à l'ouverture angulaire A du faisceau lumineux injecté dans le conducteur :

$$A = 2 . \sin^{-1} \sqrt{N0^2 - N1^2}$$

Lorsque le guide optique véhicule un flux lumineux, les parties de l'objet, image ou structure situées au contact des discontinuités sont illuminées. Complémentairement, les parties de ce même objet, image ou structure en contact avec la couche à bas indice de réfraction ne sont pas éclairées, cette couche formant écran et réfléchissant totalement le flux lumineux circulant dans le guide optique.

De façon avantageuse, les discontinuités de ladite première couche ont des dimensions faibles par rapport à l'objet à illuminer. lesdites discontinuités comprennent au moins une pluralité d'interruptions de forme circulaire. Le dispositif d'éclairage comporte de préférence une deuxième couche, déposée sur ladite première couche, et réalisée en un deuxième matériau secondaire transparent.

Ledit deuxième matériau secondaire possède un indice de réfraction qui est, de préférence, sensiblement égal à celui du matériau principal. De préférence, le rapport de la surface des discontinuités à la surface de la face recouverte par la première couche varie en fonction de la zone d'application de ladite première couche, et ce rapport augmente avec la distance séparant ladite zone de la tranche d'illumination.

On pourra ainsi :

- éclairer une partie choisie d'un objet, d'une image ou d'une structure déposé sur la surface du guide portant la couche à bas indice de réfraction, en localisant les discontinuités de cette couche au contact des parties à illuminer,

- modifier à volonté l'éclairement de tout point d'un objet, image ou structure déposé sur la surface du guide portant la couche à bas indice en utilisant la couche à bas indice de réfraction comme couche semi-réfléchissante de la lumière circulant dans le guide et conduit par lui. Ceci s'obtient en rendant très petites, voire microscopiques, les discontinuités de cette couche.

D'autres avantages et caractéristiques de l'invention ressortiront à la lecture de la description suivante faite à titre d'exemple et en référence aux dessins annexés dans lesquels :

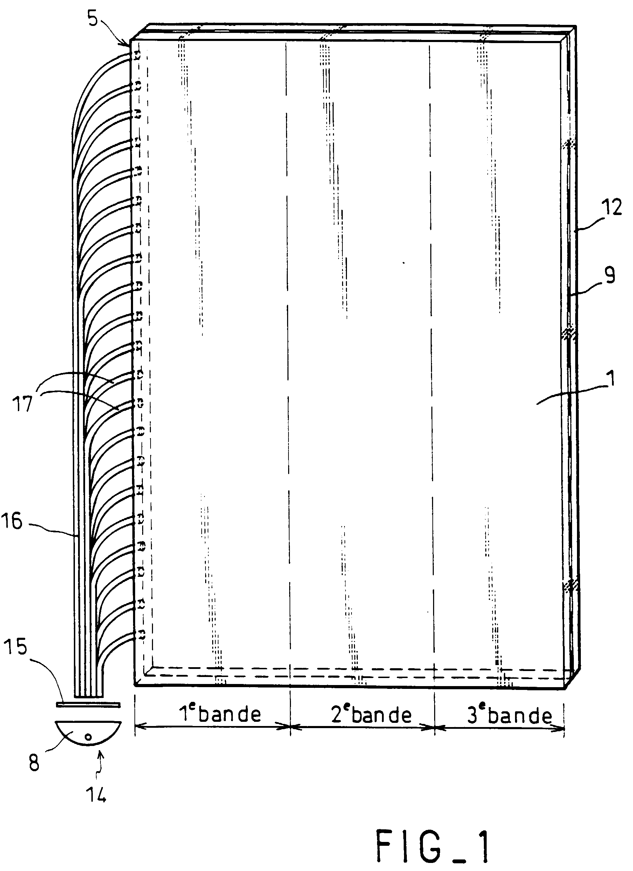

la figure 1 représente une vue de face d'un mode de réalisation du dispositif d'éclairage de l'invention.

La figure 2 représente schématiquement et partiellement éclatée une vue de face du guide optique plan de la figure 1.

La figure 3 est une coupe longitudinale selon la ligne III-III de la figure 1 d'une première variante de réalisation.

La figure 4 est une coupe verticale d'un guide optique plan, coupe faite dans le plan de la couche à bas indice.

La figure 5 est une coupe longitudinale selon la ligne V-V de la figure 4.

La figure 6 est une coupe longitudinale selon la ligne V-V de la figure 4 selon une deuxième variante de réalisation.

La figure 7 représente schématiquement une vue de face du dispositif d'éclairage de l'invention dans lequel la densité des discontinuités est variable.

La figure 8 représente un agrandissement de la zone référencée X dans la figure 7, et

la figure 9 représente un agrandissement de la zone référencée Y dans la figure, cet agrandissement étant à l'échelle de l'agrandissement de la figure 8.

Le dispositif d'éclairage représenté sur les dessins comporte un guide optique 1 réalisé en un matériau principal transparent et sous forme d'une plaque plane comportant une face avant 2 et une face arrière 3 sur laquelle est déposé un objet, une image ou une structure référencé 4. Le guide optique 1 comporte de plus une tranche d'illumination 5 éclairée par des moyens d'éclairage 6 qui comprennent, par exemple, une source lumineuse 7 et un réflecteur 8. La référence F représente le flux lumineux qui pénètre par la tranche 5 dans le guide optique 1.

Selon l'invention, la face arrière 3 du guide optique 1 est recouverte au moins partiellement d'une première couche 9 d'une substance qui réfléchit le flux lumineux F qui vient frapper la face arrière 3. Cette première couche 9 présente des discontinuités 10 réalisées sous forme de stries ou de trous. Cette première couche 9 est réalisée de préférence en un premier matériau secondaire transparent dont l'indice de réfraction N1 est inférieur à l'indice de réfraction N0 du matériau principal constituant le coeur du guide optique 1.

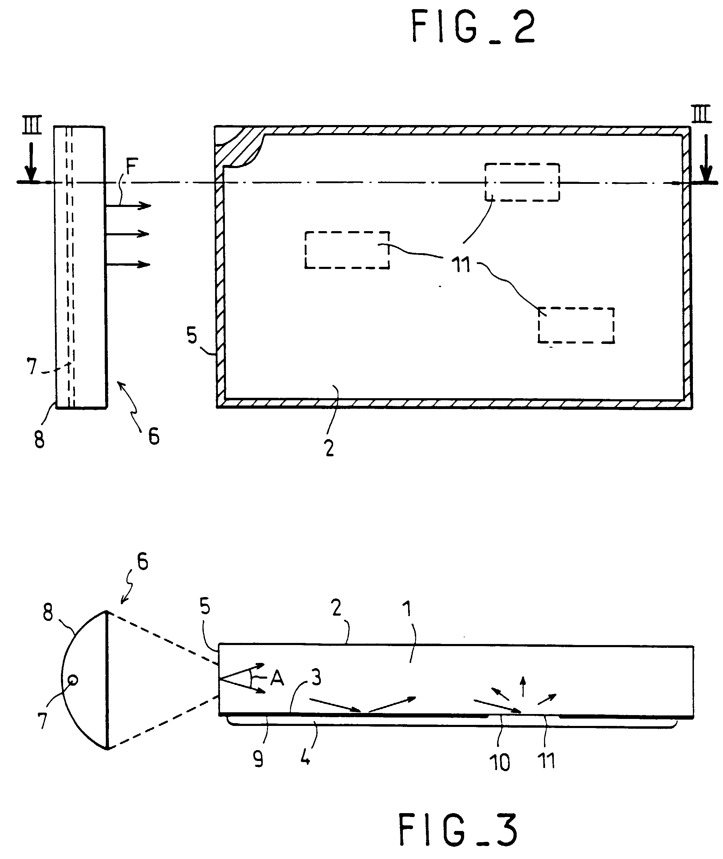

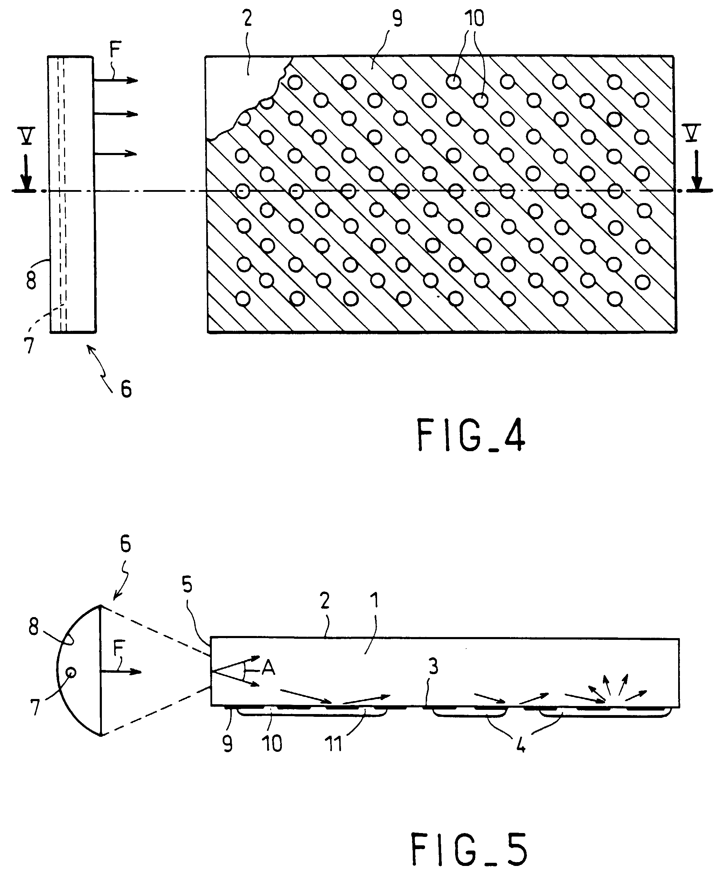

Selon une première variante de réalisation représentée sur les figures 3 et 5, l'objet, dessin ou structure 4 à éclairer est déposé sur la face extérieure de la première couche 9 de telle manière qu'au moins les parties 11 de cet objet 4 situées en regard des discontinuités 10 soient en contact intime avec le matériau principal du guide optique 1, de manière à éviter la réflexion des rayons lumineux atteignant la face 3 du guide optique 1 au niveau des discontinuités 10 et à favoriser l'éclairement de ces parties 11 par ces rayons lumineux.

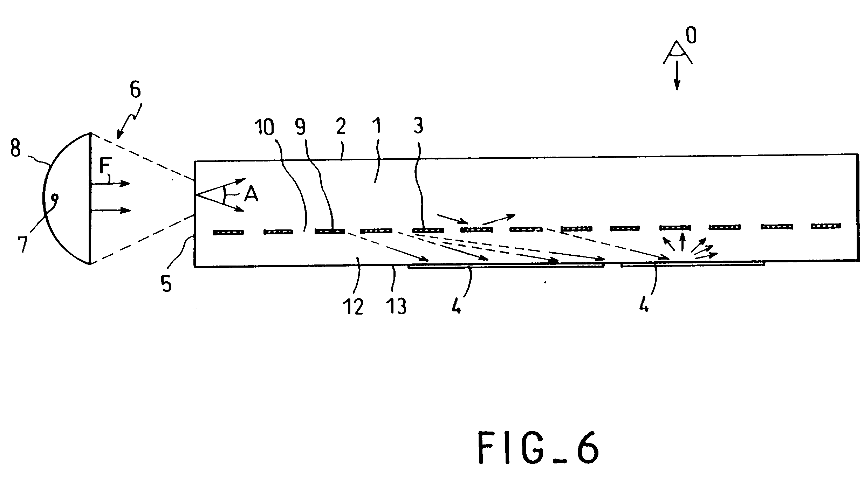

Selon un deuxième mode de réalisation, représenté sur la figure 6, une deuxième couche 12 réalisée en un deuxième matériau secondaire est interposée entre la première couche discontinue 9 et l'objet, dessin ou structure 4. Ce deuxième matériau secondaire est transparent et il possède un indice de réfraction qui est sensiblement égal à l'indice de réfraction N0 du matériau principal constituant le coeur du guide optique 1. Ce deuxième matériau peut avantageusement être identique au matériau principal. Dans ce mode de réalisation, le dessin, image ou structure 4 est déposé sur le dos 13 de la deuxième couche 12. Au niveau des discontinuités 10 de la première couche 9, le deuxième matériau secondaire de la deuxième couche 12 est en contact intime avec le matériau principal du guide optique 1 afin d'éviter des réflexions des rayons lumineux à ce niveau. Par contre, l'objet, dessin ou structure 4 est en contact intime avec le dos 13 de la deuxième couche 12 afin de favoriser, comme cela est expliqué plus loin, l'éclairement de cet objet, dessin ou structure 4, par les rayons lumineux frappant les discontinuités 10, et éviter les réflexions, sur le dos 13, des rayons lumineux qui passent par les discontinuités 10. Dans le deuxième mode de réalisation, la première couche 9 peut être constituée d'un film d'air ou de liquide disposé entre le guide optique 1 et la deuxième couche 12.

Dans les deux variantes décrites ci-dessus, le rôle et la structure des premières couches 9 sont identiques, et sont expliqués ci-après.

La structure de la couche 9 est telle qu'elle laisse passer par les discontinuités 10 une fraction du flux incident conduit par le guide 1 qui vient éclairer l'objet ou l'image déposé, l'autre partie étant réfléchie et poursuivant son parcours dans le guide optique 1. Dans la première variante de réalisation, les parties 11 de cet objet, situées au contact de la face 3 au niveau des discontinuités 10 de la couche à bas indice 9, sont illuminées par le flux lumineux circulant dans le guide 1. Au contraire, les parties de ce même objet, image ou structure 4 en contact avec la couche à bas indice de réfraction 9 ne sont pas éclairées, cette couche 9 formant écran par réflexion totale pour le flux lumineux circulant dans le guide 1.

A noter que la couche à bas indice de réfraction 9 est transparente et ne gêne pas la vision d'un objet situé derrière elle. Elle n'altère nullement l'aspect de la plaque 1 traitée.

On peut éclairer très précisément des parties 11 choisies d'un objet, d'une image ou d'une structure 4 déposé sur la face 3 du guide optique 1 portant la couche à bas indice 9, en localisant les discontinuités 10 de cette couche 9 au niveau des parties 11 à illuminer. Ainsi, il est possible d'éclairer uniquement les parties 11 à mettre en évidence d'une affiche collée sur la face du guide portant la couche discontinue (voir figures 2 et 3).

Pour tirer pleinement parti des couches discontinues à bas indice de réfraction 9, on choisit des discontinuités 10, ou perforations ayant de très petites tailles par rapport aux surfaces 11 à illuminer. Lorsque ces perforations 10 sont suffisamment petites et rapprochées, comme cela est représenté dans les figures 6, 8 et 9, l'effet d'éclairement qui en résulte paraît continu pour un observateur situé à une certaine distance. Ce phénomène est analogue à l'image d'un tube de télévision, constituée de points lumineux ou photophores, ou au grain d'une image photographique.

On notera que les dimensions des discontinuités et la distance à partir de laquelle l'éclairement paraît continu sont telles que l'angle de vision d'une discontinuité par un observateur doit être inférieur ou égal à 1 min d'arc. D'une manière générale, il convient de considérer le rapport entre la surface d'une discontinuité 10 ou la surface de l'objet à éclairer 4, et la fraction de la surface de la couche qui est ouverte par les discontinuités 10, plutôt que de considérer une dimension métrique d'une discontinuité 10. On obtient un effet d'éclairement uniforme lorsque l'objet 4 est éclairé par de très nombreuses discontinuités 10, dont la surface unitaire est faible par rapport à celle de l'objet 4 : comme mentionné précédemment, le rapport entre les dimensions ou la surface d'une discontinuité et la dimension ou la surface de l'objet à éclairer est de préférence un rapport petit, voire très petit. Ce rapport, de préférence inférieur à un dixième, peut avantageusement être bien plus faible : un millième ou un cent millième, ou moins encore.

La fraction de la surface ouverte par les discontinuités 10 laisse passer le flux lumineux. La partie couverte par la couche à bas indice 9 le réfléchit (voir figures 2 et 5). Ainsi, l'éclairement moyen de toute partie 11 d'un objet, dessin ou structure 4 déposé sur la surface 3 du guide 1 portant la couche à bas indice 9 peut être modifié à volonté en faisant varier la fraction de ladite couche ouverte par les discontinuités 10 selon les zones de la couche 9 en fonction de l'intensité du flux lumineux incident à la face interne 3 du guide optique 1 dans chaque zone.

Les discontinuités 10 ont toute forme voulue ou commode à réaliser, et sont par exemple conformées en points, ou en perforations circulaires ou en bandes, celles-ci pouvant être parallèles à la direction de propagation du flux lumineux, ou au contraire perpendiculaires à celles-ci, etc. Les dimensions des discontinuités 10 sont comprises de préférence entre quelques centièmes de millimètre et quelques millimètres. La dimension considérée ici est évidemment la dimension pertinente, comme le diamètre d'une perforation ou la largeur d'une ligne. De manière encore plus particulière, et pour que ces discontinuités soient d'une manufacture simple, leurs dimensions vont de 0,1 à 3 mm.

Pour améliorer encore le fonctionnement des dispositifs suivant l'invention, il est avantageux de disposer, entre la couche à bas indice de réfraction 9 comportant des discontinuités 10 de petite taille et l'objet, image ou structure 4 à illuminer, un dispositif permettant d'assurer un éclairement continu de la face portant l'objet à éclairer et qui est représenté sur la figure 6. Ceci est obtenu simplement en intercalant entre la couche à bas indice de réfraction 9 et l'objet, image ou structure 4 à éclairer une deuxième couche 12 d'un matériau transparent, dont l'indice de réfraction est égal ou supérieur à celui du matériau de la plaque guide optique. Cette deuxième couche ou plaque 12, nommée espaceur, est en contact avec la couche à bas indice de réfraction 9 et en contact avec le matériau du guide optique 1 au niveau des discontinuités 10. La couche à base indice 9 se trouve occluse dans l'ensemble constitué par le guide optique 1 et la deuxième couche 12. Les rayons frappant les discontinuités 10 pénètrent librement dans l'espaceur 12. Cet espaceur 12 permet de protéger la couche à bas indice 9. L'application de l'objet à illuminer 4 sur le dos 13 de la plaque 12 est plus facile à réaliser.

Du fait de l'ouverture angulaire A du faisceau circulant dans le guide, le faisceau issu d'une discontinuité 10 passant dans l'espaceur 12 s'y propage en s'élargissant. Lorsque l'espaceur 12 est suffisamment épais et/ou les discontinuités 10 de la couche à bas indice 9 de réfraction suffisamment rapprochées, les faisceaux issus des différentes discontinuités 10 finissent par se mêler et se chevaucher en s'élargissant au cours de leur propagation dans l'espaceur 12.

Dans ces conditions, la surface libre ou dos 13 de l'espaceur 12 est continûment illuminée. Un objet, une image ou une structure 4 déposé sur celle-ci est éclairé sans discontinuités. L'espaceur 12 a donc pour rôle d'intégrer le flux issu des différentes discontinuités, et de lisser l'effet d'éclairement obtenu.

D'une manière générale, mais de manière non limitative, cet espaceur 12 est réalisé aussi mince que possible, afin de réaliser des économies de matière, et de réserver au maximum à la plaque guide optique 1 son rôle de conducteur optique du flux lumineux. Cet espaceur 12 doit cependant être suffisamment épais pour remplir sa fonction, c'est-à-dire la diffusion des rayons lumineux qui le traversent d'une face à l'autre.

De préférence, on choisit la distance entre les discontinuités 10, et l'épaisseur de la plaque 12, en fonction de la répartition angulaire A du faisceau lumineux circulant dans le guide 1 : dans le cas où ce faisceau est conduit parallèlement aux faces dans une plaque de PMMA avec une ouverture de 40° dans celle-ci, correspondant à un illuminateur fonctionnant avec une ouverture de 60°, en première approximation l'espaceur 12 remplit correctement son rôle si son épaisseur est de l'ordre de grandeur de la distance entre deux discontinuités 10 de la couche à bas indice, et très correctement si cette épaisseur est 2 à 3 fois cette distance. De préférence, l'épaisseur des espaceurs 12 est inférieure à l'épaisseur de la plaque guide optique 1 et de préférence est inférieure au cinquième de l'épaisseur de cette plaque.

En cas de présence d'un espaceur 12 entre la couche à bas indice 9 et l'objet à illuminer 4, la couche à bas indice 9 peut être constituée d'un film d'air ou de liquide présentant des discontinuités.

De manière générale, ainsi qu'il a été mentionné précédemment, il est possible, avec un dispositif suivant l'invention, de moduler à volonté l'intensité d'éclairage frappant chaque partie de la surface d'un objet, image, structure 4 déposé sur la surface 3, 13 du guide optique plan 1. C'est ainsi qu'est utilisée au mieux la puissance lumineuse circulant dans le guide optique 1 pour un besoin d'éclairage donné, tel que par exemple l'illumination d'une surface 4 couvrant partiellement le guide optique 1, la mise en évidence par un éclairage d'une partie d'une surface ou d'un objet, l'obtention d'effets spéciaux, etc.

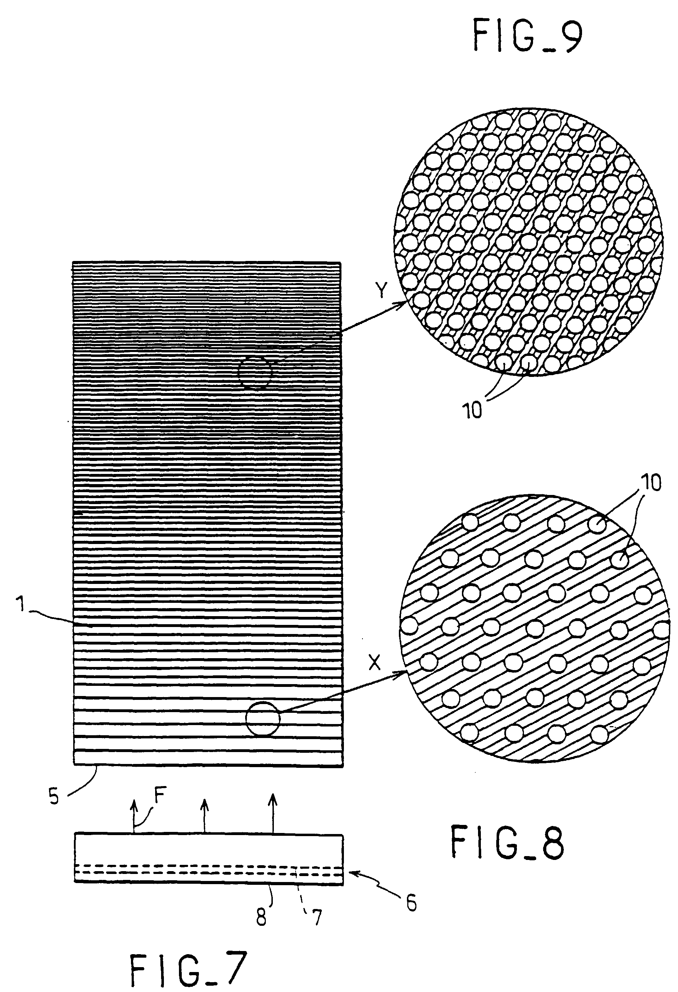

Ces effets sont obtenus en faisant varier à volonté le rapport entre les propriétés transmissives et les propriétés réflectrices de la couche à bas indice de réfraction 9 en chacune de ses zones, par un taux de perforations plus ou moins grand, de manière à éclairer plus ou moins, ou au contraire à assombrir relativement plus ou moins, les parties 11 correspondantes du dessin ou de l'objet à illuminer. On peut en particulier obtenir un éclairement moyen très homogène et uniforme d'un objet, dessin ou structure 4 déposé sur la surface du guide optique 1 portant la couche à bas indice de réfraction discontinue 9 en ajustant la fraction de la surface de cette dernière ouverte par les discontinuités 10 en fonction de l'intensité d'éclairage frappant la surface de la couche 9 dans chaque zone, de manière à conserver constante l'intensité lumineuse moyenne transmise à l'objet 4. Notamment, il est possible de compenser l'affaiblissement du flux lumineux dû à sa consommation pour l'éclairage de l'objet 4 par une plus grande ouverture de la couche à bas indice 9. Pour ce faire, on réalise, dans la direction de propagation du flux lumineux, un gradient d'ouverture de la couche à bas indice de réfraction inverse du gradient de l'intensité du flux lumineux affleurant la surface de la plaque, de manière à compenser exactement l'un par l'autre. Ce mode de réalisation est représenté sur les figures 7 à 9.

La face avant 2 du guide optique peut être recouverte d'une couche protectrice comportant un vernis ayant un indice de réfraction inférieur à l'indice de réfraction du matériau principal. Le vernis protège le guide optique 1 contre les poussières. Cette couche de vernis peut elle-même être recouverte d'une couche d'un matériau résistant aux agressions mécaniques.

Les matériaux adaptés à la réalisation des plaques guide optiques 1 sont, de manière non limitative, les résines transparentes de type polystyrène, polycarbonate, polyméthacrylate, polyacrylate, les verres, la silice fondue.

De manière préférée, des résines méthacryliques sont choisies telles que le méthacrylate de méthyle, le méthacrylate d'éthyle, le méthacrylate de butyle, le méthacrylate de propyle ou d'isopropyle. Ces matériaux sont utilisés sous forme spécialement purifiée comme les PMMA utilisés pour la fabrication des fibres optiques en plastique, afin d'améliorer la qualité chromatique de la lumière transmise.

Les grades ordinaires de PMMA du commerce servant à la réalisation de plaques ou de produits extrudés présentent en effet sur de fortes longueurs de transmission optique une coloration jaune-vert ou brunâtre nuisible à l'effet esthétique ou d'éclairage recherché par l'invention.

Cette coloration, due à des impuretés et à des imperfections de diverses natures présentes dans le matériau, disparaît par une purification poussée et des techniques de fabrication adaptées, comme celles aujourd'hui utilisées pour la fabrication des fibres optiques en plastique en PMMA.

De manière générale, mais non limitative, les dispositifs suivant l'invention peuvent être réalisés au moyen de plaques ou feuilles de PMMA de 0,25 à 25 mm d'épaisseur, et plus particulièrement de 1 à 10 mm d'épaisseur.

Parmi les matériaux à bas indice de réfraction utilisables, les polymères silicones, dont l'indice de réfraction est généralement compris entre 1,39 et 1,43, sont choisis avec succès. Les polymères fluorés, dont l'indice de réfraction est compris entre 1,3 et 1,4, sont également utilisables tels que les polyacrylates et polyméthacrylates d'alcools fluorés ou perfluorés en $C_2$ à $C_{11}$, ou au-delà.

Suivant un mode préféré de réalisation de la couche à bas indice de réfraction 9 suivant l'invention, l'épaisseur de celle-ci est petite, comprise entre 0,5 et 10 μm.

Parmi les applications du produit suivant l'invention, on citera : les arts graphiques, l'éclairage, la signalisation, la publicité, la décoration, cette liste n'étant pas limitative.

Les applications du produit découleront :

- de son aptitude à répartir la lumière de manière contrôlée sur une surface à éclairer,
- de l'aspect transparent des plaques distributrices de lumière suivant l'invention, parfaitement limpides, qui constituent un support esthétique pour des créations picturales, des dessins, une publicité, etc.,
- de la légèreté et de la souplesse en formes du dispositif d'éclairage réalisé avec les produits suivant l'invention.

## EXEMPLE DE REALISATION

Un diffuseur de lumière plan est réalisé de la manière suivante .

Une plaque 1 de polyméthacrylate de méthyle (PMMA) de 0,3m sur 0,45 m, de 4 mm d'épaisseur, ou plaque guide optique, aux chants perpendiculaires à la plaque et optiquement polis, est recouverte sur une de ses faces d'une couche 9 de 3 μm d'épaisseur de : polyméthacrylate de 1-H et 1-H pentadécafluorooctyle (PMFO)
Indice de réfraction du PMMA : $N_0 = 1,495$
Indice de réfraction du PMFO : $N_1 = 1,36$.

Cette couche 9 est éliminée par bandes de 0,5 mm à 1,2 mm de largeur tracées parallèlement à la plus grande dimension de la plaque, et régulièrement espacées les unes par rapport aux autres, de manière à laisser à nu la surface du PMMA.

R étant localement le rapport de la surface du guide optique 1 mise à nu à la surface de la face du guide optique 1 supportant ladite couche 9 de matériau à bas indice, la correspondance de R avec E, l'espacement des bandes repéré à partir de la tranche éclairée 5 du guide optique 1 figure dans le tableau suivant :

| E en cm | R en % | Largeur de bande |
|---|---|---|
| 0,0 - 5,0 | 15 | 0,5 |
| 5,0 - 10,0 | 18 | 0,5 |
| 10,0 - 15,0 | 27 | 1,0 |
| 15,0 - 20,0 | 32 | 1,0 |
| 20,0 - 25,0 | 41 | 1,2 |
| 25,0 - 27,5 | 56 | 1,2 |
| 27,5 - 30,0 | 80 | 1,2 |

Cette plaque constitue la plaque guide optique 1.

Une deuxième plaque 12 de PMMA de 0,3m sur 0,45m, de 3 mm d'épaisseur, avec chants polis (l'espaceur), est parfaitement collée de manière à être jointive sur toute sa surface sur la face de la plaque précédente portant le dépôt 9 à l'aide de méthacrylate liquide, polymérisé in situ. On prend garde à garder intact l'état de surface des chants lors de la coulée.

On obtient finalement une plaque apparemment unique de 7mm d'épaisseur comportant un film de polymère 9 à bas indice de réfraction occlus dans sa masse. Il y a continuité du matériau de la plaque (PMMA) par les ouvertures 10 ménagées dans ce film.

Cette plaque de 7 mm d'épaisseur est recouverte sur la face libre de la plaque support 12, ou espaceur, c'est-à-dire de la plaque de 3 mm d'épaisseur rapportée, d'une couche de peinture acrylique blanche de haute qualité, type blanc de titane, sur une épaisseur suffisante.

Les chants libres de la plaque sont recouverts d'un film métallisé argenté servant de réflecteur sur tous ses côtés en ne laissant libre que le chant 5 de la plaque guide optique 1 sur sa plus grande dimension du côté où la couche de polymère 9 à bas indice de réfraction est la moins ouverte (15 % d'ouverture).

Cette plaque 1 est alimentée en lumière par le chant 5 de la plaque laissé libre à l'aide du dispositif suivant :

- Une source halogène 14 de 100 W - 12 V est placée au premier foyer d'un miroir 8 collecteur ellipsoïde dichroïque de 50 mm de diamètre, dont le point focal secondaire est à 32 mm du front du miroir.
  Le rayonnement de cette lampe se trouve focalisé sous forme d'une tache de 10 mm de diamètre environ à 32 mm de l'ellipsoïde.
- Un filtre anticalorique 15 Schott-type KG1 de 3 mm d'épaisseur est interposé à 10 mm du miroir 8 pour achever de filtrer le rayonnement infrarouge émis par la lampe susceptible d'endommager les guides optiques plastiques.
- Un faisceau 16 de 21 fibres optiques 17 en PMMA de 2 mm de diamètre dont l'ouverture numérique est de 0,50 est disposé de manière à collecter la lumière issue du dispositif focaliseur précédent.
  La face d'entrée des 21 fibres optiques est disposée à 32 mm du miroir 8 ellipsoïde perpendiculairement à l'axe reliant les points focaux du miroir et suivant un empilement compact centré autour de cet axe, les faces d'entrée des fibres 17 étant toutes sur le même plan, de manière à collecter le flux lumineux focalisé.

L'autre extrémité des fibres 17 est appliquée à un intervalle régulier contre le chant 5 laissé libre de la plaque guide optique 1 précédemment décrite de manière à y faire pénétrer de manière uniforme la lumière de la source sur les 45 cm de sa longueur.

Lorsque le dispositif ainsi réalisé est allumé, le fond blanc de la plaque 1 émet un flux lumineux avec la puissance d'émission suivante en fonction de la distance à la tranche éclairée 5 du guide optique 1.

| E en cm | Emittance N I T S |
|---|---|
| 1re bande de 10 cm | 581 |
| 2e bande de 10 cm | 581 |
| 3e bande de 10 cm | 549 |

## Revendications

1. Dispositif d'éclairage comprenant au moins un guide optique (1) conformé en une plaque, dont le coeur est réalisé en un matériau principal transparent, guide optique (1) possédant au moins une face (3) la délimitant et une tranche d'illumination (5), éclairé par l'intermédiaire de ladite tranche (5) par au moins une source de lumière (6) et destiné à l'éclairement d'un objet, d'une image ou d'une structure (4) déposé sur ladite face (3), caractérisé en ce que cette face est recouverte au moins partiellement d'une première couche (9) d'une substance destinée à réfléchir la lumière transmise par ledit guide optique, ladite première couche (9) présentant des discontinuités (10) de telle manière qu'un flux lumineux atteignant ladite face (3) dans la zone d'une discontinuité (10) éclaire un objet, une image ou une structure (4) déposé sur ladite face (3) recouverte de ladite première couche (9) et en contact avec le matériau du guide optique en regard desdites discontinuités.

2.   Dispositif selon la revendication 1, caractérisé en ce que ladite couche (9) est réalisée en un premier matériau secondaire transparent dont l'indice de réfraction est inférieur à l'indice de réfraction dudit matériau principal.

3.   Dispositif selon l'une quelconque des revendications 1 et 2, caractérisé en ce que le rapport entre la surface d'une discontinuité (10) et la surface de l'objet à illuminer (4) est inférieur à un dixième.

4.   Dispositif selon la revendication 3, caractérisé en ce que le rapport entre la surface d'une discontinuité (10) et la surface de l'objet à allumer (4) est inférieur à un millième.

5.   Dispositif selon l'une quelconque des revendications 1 à 4, caractérisé en ce que lesdites discontinuités (10) comprennent au moins une pluralité d'interruptions de forme circulaire de ladite première couche (9).

6.   Dispositif selon l'une quelconque des revendications 1 à 5, caractérisé en ce qu'il comporte une deuxième couche (12), déposée sur ladite première couche (9) et réalisée en un deuxième matériau secondaire transparent, ledit deuxième matériau étant en contact avec le matériau du guide optique (1) en regard desdites discontinuités (10), l'objet, image ou structure (4) à éclairer étant déposé sur le dos (13) de ladite deuxième couche (12).

7.   Dispositif selon la revendication 6, caractérisé en ce que ledit deuxième matériau secondaire possède un indice de réfraction qui est sensiblement égal à celui du matériau principal.

8.   Dispositif selon l'une quelconque des revendications 6 à 7, caractérisé en ce que la première couche (9) est constituée d'un film d'air ou de liquide.

9.   Dispositif selon l'une quelconque des revendications 6 à 8, caractérisé en ce que les discontinuités (10) sont conformées en bandes parallèles à la direction de propagation du flux lumineux.

10.   Dispositif selon l'une quelconque des revendications 1 à 9, caractérisé en ce que le rapport de la surface des discontinuités (10) à la surface de la face recouverte par la première couche (9) varie en fonction de la zone d'application de ladite première couche.

11.   Dispositif selon la revendication 10, caractérisé en ce que ledit rapport augmente avec la distance séparant ladite zone de la tranche d'illumination (5).

12.   Dispositif selon l'une quelconque des revendications 1 à 5, caractérisé en ce que les discontinuités (10) sont réalisées sous forme d'aspérités sur la face du guide optique recouverte par l'image (4).

13.   Dispositif selon la revendication 12, caractérisé en ce que la première couche (9) est constituée d'un film d'air ou de liquide.

14.   Dispositif selon l'une quelconque des revendications 12 ou 13, caractérisé en ce que l'image (4) est en contact intime avec les sommets des aspérités.

15.   Dispositif d'éclairage comprenant au moins un guide optique (1) conformé en une plaque, dont le coeur est réalisé en un matériau principal transparent, guide optique (1) possédant au moins une face (3) la délimitant et une tranche d'illumination (5), éclairé par l'intermédiaire de ladite tranche (5) par au moins une source de lumière (6) et destiné à l'éclairement d'un objet, d'une image ou d'une structure (4) déposé sur ladite face (3), caractérisé en ce que cette face est recouverte au moins partiellement d'une première couche réalisée en une substance dont l'indice de réfraction est inférieur à l'indice de réfraction dudit matériau principal, et en ce que ladite première couche comporte des discontinuités de telle manière qu'un flux lumineux atteignant ladite face dans la zone d'une discontinuité éclaire directement la partie de l'objet, image ou structure qui est en contact avec le matériau du guide optique en regard de ladite discontinuité.

## Patentansprüche

1.   Beleuchtungsvorrichtung, umfassend mindestens einen optischen Leiter (1) in Form einer Platte, deren Innerstes aus einem transparenten Hauptmaterial hergestellt ist, wobei der optische Leiter (1) mindestens eine diese begrenzende Fläche (3) und einen Illuminationsabschnitt (5) aufweist, über diesen Abschnitt (5) mittels mindestens einer Lichtquelle (6) beleuchtet ist und zur Beleuchtung eines Gegenstandes, eines Bildes oder einer Struktur (4) dient, welche auf der Fläche (3) angeordnet sind, dadurch gekennzeichnet, daß diese Fläche zumindest teilweise von einer ersten Schicht (9) aus einer Substanz bedeckt ist, welche zum Reflektieren des vom optischen Leiter übertragenen Lichtes bestimmt ist, wobei die erste Schicht (9) Unterbrechungen (10) aufweist, so daß ein die Fläche (3) in der Zone einer Unterbrechung (10) erreichender Lichtstrom einen Gegenstand, ein Bild oder eine Struktur (4) erleuchtet, welche auf der mit der ersten Schicht (9) bedeckten Fläche (3) angeordnet sind und gegenüber den Unterbrechungen in Kontakt mit dem Material des optischen Leiters stehen.

2. Vorrichtung nach Anspruch 1, dadurch gekennzeichnet, daß die Schicht (9) aus einem ersten transparenten Nebenmaterial hergestellt ist, dessen Brechungsindex unter dem Brechungsindex des Hauptmaterials liegt.

3. Vorrichtung nach einem der Ansprüche 1 und 2, dadurch gekennzeichnet, daß das Verhältnis zwischen der Oberfläche einer Unterbrechung (10) und der Oberfläche des zu beleuchtenden Gegenstandes (4) weniger als ein Zehntel beträgt.

4. Vorrichtung nach Anspruch 3, dadurch gekennzeichnet, daß das Verhältnis zwischen der Oberfläche einer Unterbrechung (10) und der Oberfläche des zu beleuchtenden Gegenstandes (4) weniger als ein Tausendstel beträgt.

5. Vorrichtung nach einem der Ansprüche 1 bis 4, dadurch gekennzeichnet, daß die Unterbrechungen (10) mindestens eine Mehrzahl von kreisförmigen Unterbrechungen der ersten Schicht (9) aufweisen.

6. Vorrichtung nach einem der Ansprüche 1 bis 5, dadurch gekennzeichnet, daß sie eine zweite Schicht (12) aufweist, die auf der ersten Schicht (9) angeordnet und aus einem zweiten transparenten Nebenmaterial hergestellt ist, welches zweite Material gegenüber den Unterbrechungen (10) in Kontakt mit dem Material des optischen Leiters (1) steht, wobei der zu beleuchtende Gegenstand, das zu beleuchtende Bild oder die zu beleuchtende Struktur (4) auf der Rückseite (13) der zweiten Schicht (12) angeordnet ist.

7. Vorrichtung nach Anspruch 6, dadurch gekennzeichnet, daß das zweite Nebenmaterial einen Brechungsindex besitzt, der im wesentlichen gleich jenem des Hauptmaterials ist.

8. Vorrichtung nach einem der Ansprüche 6 bis 7, dadurch gekennzeichnet, daß die erste Schicht (9) aus einem Luft- oder Flüssigkeitsfilm besteht.

9. Vorrichtung nach einem der Ansprüche 6 bis 8, dadurch gekennzeichnet, daß die Unterbrechungen (10) als zur Ausbreitungsrichtung des Lichtstromes parallele Bänder ausgebildet sind.

10. Vorrichtung nach einem der Ansprüche 1 bis 9, dadurch gekennzeichnet, daß das Verhältnis der Oberfläche der Unterbrechungen (10) zur Oberfläche der mit der ersten Schicht (9) bedeckten Fläche als Funktion der Aufbringungszone der ersten Schicht variiert.

11. Vorrichtung nach Anspruch 10, dadurch gekennzeichnet, daß dieses Verhältnis mit dem diese Zone vom Illuminationsabschnitt (5) trennenden Abstand steigt.

12. Vorrichtung nach einem der Ansprüche 1 bis 5, dadurch gekennzeichnet, daß die Unterbrechungen (10) als Unebenheiten auf der vom Bild (4) bedeckten Fläche des optischen Leiters ausgebildet sind.

13. Vorrichtung nach Anspruch 12, dadurch gekennzeichnet, daß die erste Schicht (9) aus einem Luft- oder Flüssigkeitsfilm besteht.

14. Vorrichtung nach einem der Ansprüche 12 oder 13, dadurch gekennzeichnet, daß das Bild (4) in innigem Kontakt mit den höchsten Punkten der Unebenheiten steht.

15. Beleuchtungsvorrichtung, umfassend mindestens einen optischen Leiter (1) in Form einer Platte, deren Innerstes aus einem transparenten Hauptmaterial hergestellt ist, wobei der optische Leiter (1) mindestens eine diese begrenzende Fläche (3) und einen Illuminationsabschnitt (5) aufweist, über diesen Abschnitt (5) mittels mindestens einer Lichtquelle (6) beleuchtet ist und zur Beleuchtung eines Gegenstandes, eines Bildes oder einer Struktur (4) dient, welche auf der Fläche (3) angeordnet sind, dadurch gekennzeichnet, daß diese Fläche zumindest teilweise von einer ersten Schicht bedeckt ist, welche aus einer Substanz hergestellt ist, deren Brechungsindex unter dem Brechungsindex des Hauptmaterials liegt, und daß die erste Schicht Unterbrechungen aufweist, so daß ein die Fläche in der Zone einer Unterbrechung erreichender Lichtstrom den Teil des Gegenstandes, des Bildes oder der Struktur direkt erleuchtet, welcher gegenüber dieser Unterbrechung in Kontakt mit dem Material des optischen Leiters steht.

## Claims

1. A lighting device comprising at least one plate-shaped light guide (1) whose core is made of a main transparent material, the light guide (1) possessing an illumination edge (5) and at least one face (3) that delimits the guide, the guide being illuminated via said edge (5) from at least one light source (6) and being designed to illuminate an object, an image, or a structure (4) deposited on said face (3), the device being characterised in that said face is covered at least in part by a first layer (9) of a substance designed to reflect the light transmitted by said light guide, said first layer (9) having discontinuities (10) such that light flux reaching said face (3) in the zone of a discontinuity (10) illuminates an object, an image, or a structure (4) deposited on said face (3) covered by said first layer (9) and in contact with the light guide material through said discontinuities.

2. The device according to claim 1, characterised in that said layer (9) is made of a first secondary transparent material whose refractive index is lower that the refractive index of said main material.

3. The device according to one of claims 1 and 2, characterised in that the ratio of the area of a discontinuity (10) to the area of the object (4) to be illuminated is less then one-tenth.

4. The device according to claim 3, characterised in that the ratio of the area of a discontinuity (10) to the area of the object (4) to be illuminated is less then one-thousandth.

5. The device according to any one of claims 1 to 4, characterised in that said discontinuities (10) comprise at least a plurality of circular shaped interruptions in said first layer (9).

6. The device according to any one of claims 1 to 5, characterised in that it includes a second layer (12) deposited on said first layer (9) and made of a second secondary transparent material, said second material being in contact with the material of the light guide (1) through said discontinuities (10), the object, the image, or the structure (4) to be illuminated being deposited on the back (13) of said second layer (12).

7. The device according to claim 6, characterised in that said second secondary material possesses a refractive index that is substantially equal to that of the main material.

8. The device according to any one of claims 6 to 7, characterised in that the first layer (9) is constituted by a film of air or of liquid.

9. The device according to any one of claims 6 to 8, characterised in that the discontinuities (10) are in the form of strips that are parallel to the light flux propagation direction.

10. The device according to any one of claims 1 to 9, characterised in that the ratio of the area of the discontinuities (10) to the area of the face covered by the first layer (9) varies as a function of the zone in which said layer is applied.

11. The device according to claim 10, characterised in that said ratio increases with the distance separating said zone from the illumination edge (5).

12. The device according to any one of claims 1 to 5, characterised in that the discontinuities (10) are made in the form of projections on the face of the light guide that is covered by the image (4).

13. The device according to claim 12, characterised in that the first layer (9) is constituted by a film of air or of liquid.

14. The device according to any one of claims 12 or 13, characterised in that the image (4) is in intimate contact with the tops of the projections.

15. The lighting device comprising at least one plate-shaped light guide (1) whose core is made of a main transparent material, the light guide (1) possessing an illumination edge (5) and at least one face (3) that defines the guide, the guide being illuminated via said edge (5) from at least one light source (6) and being designed to illuminate an object, an image, or a structure (4) deposited on said face (3), characterised in that said face is covered at least in part by a first layer made of a substance whose refractive index is lower than the refractive index of said main material, and in that said first layer comprises discontinuities in such a manner that light flux reaching said face in the zone of a discontinuity directly illuminates the portion of the object, image or structure that is in contact with the material of the light guide through said discontinuity.

FIG_1

# FIG_2

# FIG_3

FIG_4

FIG_5

FIG_6

FIG_9

FIG_8

FIG_7